# EUROPEAN PATENT APPLICATION

(11) **EP 2 922 255 A1**
(43) Date of publication of application: **23.09.2015**
(21) Application number: 12888328.7
(22) Date of filing: 28.12.2012
(51) Int. Cl.: H04L 12/801, H04W 28/10

(54) **METHOD AND APPARATUS FOR PROVIDING CONTENT BY SELECTING DATA ACCELERATION ALGORITHM**

(30) Priority: 15.11.2012 KR 20120129301
(71) Applicant: Cdnetworks Co., Ltd., Seoul 135-935 (KR)
(72) Inventor: CHOI, Jun-Ho, Seoul (KR); AHN, Sang-Joon, Seoul (KR)
(74) Representative: Rees, Simon John Lewis
(86) International application number: PCT/KR2012/011801
(87) International publication number: WO 2014/077459

(57) **Abstract**

A method for selecting a data acceleration algorithm based on information related to a communication network and then providing content is disclosed. The method is comprising, extracting an Internet protocol (IP) address included in a received content transmission request; determining whether or not information about a communication network service provider that matches the extracted IP address is present; selecting a data acceleration algorithm based on the information about the communication network service provider if it is determined that the information about the communication network service provider is present; and sending requested content in accordance with the selected data acceleration algorithm.

## Description

### BACKGROUND OF THE INVENTION

### 1. Field of the Invention

The present invention relates generally to a method and apparatus for providing content and, more particularly, to a method and apparatus for selecting a data acceleration algorithm based on information related to a communication network and then providing content.

### 2. Description of the Related Art

With the popularization of various types of handheld terminals, such as smart phones, tablet computers, touch pads, and laptop computers, thanks to the development of mobile communication technology, not only Internet access over a mobile communication network but also Internet access over conventional wired/wireless Internet communication networks has considerably increased.

For ease of description, a communication network over which the Internet is accessed without the intervention of a mobile communication network is hereinafter referred to as an "Internet communication network."

A mobile communication network and an Internet communication network are different in their characteristics, and are used by different devices. Accordingly, data may be transmitted more efficiently if the data is transmitted in accordance with the characteristics of the communication networks.

Furthermore, the same mobile communication network or the same Internet communication network may have different characteristics based on application technology or an area where the communication network has been constructed.

That is, the characteristics of a communication network are different based on a communication network service provider, an area where the communication network has been constructed and the characteristics of the communication network, such as whether the communication network is a mobile communication network or an Internet communication network.

Accordingly, although content is the same, it is necessary to use a technique for sending content more rapidly based on a communication network service provider, an area where a communication network has been constructed and the type of communication network.

### SUMMARY OF THE INVENTION

Accordingly, the present invention has been made keeping in mind the above problems occurring in the prior art, and an object of the present invention is to provide a method and apparatus for providing content, which are capable of providing content more rapidly in accordance with the characteristics of a communication network while managing a single content server.

Another object of the present invention is to provide a method and apparatus for providing content, which are capable of providing content more rapidly in accordance with a different data acceleration algorithm based on the characteristics of a communication network.

Other objects of the present invention will be readily apparent from descriptions of the following embodiments.

In order to achieve the above objects, in accordance with an aspect of the present invention, there is provided a content provision method.

In accordance with an embodiment of the present invention, there is provided a content provision method, the method being performed by a content server connected to a communication network and configured to provide content, the method including extracting an Internet protocol (IP) address included in a received content transmission request; determining whether or not information about a communication network service provider that matches the extracted IP address is present; selecting a data acceleration algorithm based on the information about the communication network service provider if it is determined that the information about the communication network service provider is present; and sending requested content in accordance with the selected data acceleration algorithm.

The information about the communication network service provider may be information including the name, service area and type of communication network of the communication network service provider.

Furthermore, the information about the type of communication network may be information indicative of one of the mobile communication network and the Internet communication network.

Furthermore, if the type of communication network is the mobile communication network, the data acceleration algorithm may be a delay-based transfer control protocol (TCP) congestion control algorithm.

Furthermore, if the type of communication network is the Internet communication network, the data acceleration algorithm may be a loss-based TCP congestion control algorithm.

Determining whether or not the information about the communication network service provider that matches the extracted IP address is present may include, if it is determined that the information about the communication network service provider matched with the extracted IP address is not present, transmitting the requested content without applying the data acceleration algorithm.

Determining whether or not the information about the communication network service provider that matches the extracted IP address is present may include, if it is determined that the information about the communication network service provider matched with the extracted IP address is not present, measuring latency between the content server and a device that has made the content transmission request, and determining the type of communication network may be determined by comparing the measured latency with a predetermined reference. Thereafter, the data acceleration algorithm may be selected based on information about the determined type of communication network.

Determining whether or not the information about the communication network service provider that matches the extracted IP address is present may include, if it is determined that the information about the communication network service provider matched with the extracted IP address is not present, determining the type of communication network by comparing information about at least one of the maximum segment size (MSS) and the maximum transfer size (MTU) between the content server and a device that has made the content transmission request with a predetermined reference. Thereafter, the data acceleration algorithm may be selected based on information about the determined type of communication network.

In accordance with another aspect of the present invention, there is provided a content provision apparatus.

In accordance with an embodiment of the present invention, there is provided an apparatus connected to a communication network and configured to provide content, the apparatus including an IP address storage unit configured to store information about a communication network service provider that matches an IP address; an acceleration algorithm storage unit configured to store a data acceleration algorithm; a communication network type determination unit configured to determine whether or not an IP address extracted from a content transmission request is included in the IP address storage unit; and a communication unit configured to send requested content in accordance with a data acceleration algorithm selected based on the information about the communication network service provider if, as a result of the determination of the communication network type determination unit, it is determined that the IP address extracted from the content transmission request is included in the IP address storage unit.

The information about the communication network service provider may be information including the name, service area and type of communication network of the communication network service provider.

Furthermore, the information about the type of communication network may be information indicative of one of the mobile communication network and the Internet communication network.

Furthermore, if the type of communication network is the mobile communication network, the data acceleration algorithm that is used for the communication unit to send the requested content may be a delay-based transfer control protocol (TCP) congestion control algorithm.

Furthermore, if the type of communication network is the Internet communication network, the data acceleration algorithm that is used for the communication unit to send the requested content may be a loss-based TCP congestion control algorithm.

If, as a result of the determination of the communication network type determination unit, it is determined that the information about the communication network service provider matched with the extracted IP address is not present, the communication unit may send the requested content without in accordance with the data acceleration algorithm.

If, as a result of the determination of the communication network type determination unit, it is determined that the information about the communication network service provider matched with the extracted IP address is not present, the communication network type determination unit may measure latency between the content server and a device that has made the content transmission request and determine the type of communication network by comparing the measured latency with a predetermined reference, and the communication unit may send the requested content in accordance with a data acceleration algorithm selected based on information about the type of communication network which is determined by the communication network type determination unit.

If, as a result of the determination of the communication network type determination unit, it is determined that the information about the communication network service provider matched with the extracted IP address is not present, the communication network type determination unit may determine the type of communication network by comparing information about at least one of an MSS and an MTU between the content server and a device that has made the content transmission request with a predetermined reference, and the communication unit may send the requested content in accordance with a data acceleration algorithm selected based on information about the type of communication network which is determined by the communication network type determination unit.

In accordance with still another aspect of the present invention, there is provided a recording medium having a program for implementing a content provision method recorded thereon.

In accordance with an embodiment of the present invention, there is provided a recording medium having a program for implementing a content provision method recorded thereon, the program for implementing a content provision method being performed by a content server connected to a communication network and configured to provide content, the method including extracting an IP address included in a received content transmission request; determining whether or not information about a communication network service provider that matches the extracted IP address is present; selecting a data acceleration algorithm based on the information about the communication network service provider if it is determined that the information about the communication network service provider is present; and sending requested content in accordance with the selected data acceleration algorithm.

The information about the communication network service provider may be information including the name, service area and type of communication network of the communication network service provider.

Furthermore, the information about the type of communication network may be information indicative of one of the mobile communication network and the Internet communication network.

Furthermore, if the type of communication network is the mobile communication network, the data acceleration algorithm may be a delay-based TCP congestion control algorithm.

Furthermore, if the type of communication network is the Internet communication network, the data acceleration algorithm may be a loss-based TCP congestion control algorithm.

Determining whether or not the information about the communication network service provider that matches the extracted IP address is present may include, if it is determined that the information about the communication network service provider matched with the extracted IP address is not present, transmitting the requested content without applying the data acceleration algorithm.

Determining whether or not the information about the communication network service provider that matches the extracted IP address is present may include, if it is determined that the information about the communication network service provider matched with the extracted IP address is not present, measuring latency between the content server and a device that has made the content transmission request, and determining the type of communication network may be determined by comparing the measured latency with a predetermined reference. Thereafter, the data acceleration algorithm may be selected based on information about the determined type of communication network.

Determining whether or not the information about the communication network service provider that matches the extracted IP address is present may include, if it is determined that the information about the communication network service provider matched with the extracted IP address is not present, determining the type of communication network by comparing information about at least one of the maximum segment size (MSS) and the maximum transfer size (MTU) between the content server and a device that has made the content transmission request with a predetermined reference. Thereafter, the data acceleration algorithm may be selected based on information about the determined type of communication network.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram illustrating the configuration of a content provision system to which the present invention may be applied and in which both a mobile communication network and an Internet communication network are connected to a content server;
FIG. 2 is a flowchart illustrating a method of providing content according to an embodiment of the present invention; and
FIG. 3 is a diagram illustrating the configuration of a content server according to an embodiment of the present invention.

### DESCRIPTION OF THE PREFERRED EMBODIMENTS

The present invention may be modified in various ways, and may be implemented to have several embodiments. Specific embodiments are illustrated in the drawings and described in detail in the following description. It is however to be understood that the present invention is not intended to be limited to the specific embodiments of the present invention but the specific embodiments include all modifications, equivalents and substitutions that fall within the spirit and technical scope of the present invention.

The same reference numbers are used throughout the drawings to refer to the same or like parts. In the following description of the present invention, detailed descriptions of the known functions and configurations will be omitted if it is deemed that they may make the gist of the present invention unnecessarily obscure.

Terms, such as the terms "first" and "second," may be used to describe various elements, but the elements should not be limited by the terms. The terms are used to only distinguish between elements.

For example, a first element may be named a second element without departing from the scope of the present invention. Likewise, a second element may be named a first element.

The term "and/or" includes a combination of a plurality of related and described items, or any one of a plurality of related and described items.

When it is said that one element is "connected" or "coupled" with the other element, it should be understood that one element may be directly connected or coupled with the other element, but a third element may exist between the two elements.

In contrast, when it is said that one element is "directly connected" or "directly coupled" with the other element, it should be understood that a third element does not exist between the two elements.

The terms used in this application are used to only describe specific embodiments, and are not intended to limit the present invention.

A singular expression includes a plural expression unless clearly defined otherwise in the context. In this application, it should be understood that the terms "include," "comprise" and "have" are intended to designate that characteristics, numbers, steps, operations, elements, or parts described in the specification or a combination thereof are present, but are not intended to exclude the presence or possible addition of one or more other characteristics, numbers, steps, operations, elements, parts, or combinations thereof advance.

All terms used herein, including technical or scientific terms, have the same meanings as those typically understood by those skilled in the art unless otherwise defined.

Terms, such as ones defined in common dictionaries, should be construed as having the same meanings as those in the context of related technology, and should not be construed as having ideal or excessively formal meanings unless clearly defined in the present invention.

Embodiments of the present invention are described in more detail with reference to the accompanying drawings. In the description of the present invention, the same reference numerals are used to denote the same elements throughout the drawings, and redundant descriptions of the same elements are omitted.

In the aforementioned description and the following description, a server that responds to a data request is called a content server for convenience of description, but the content server may include any server configured to send and receive data so that data is displayed on a user-side terminal. The content server may be called another term, such as a web server or a data server.

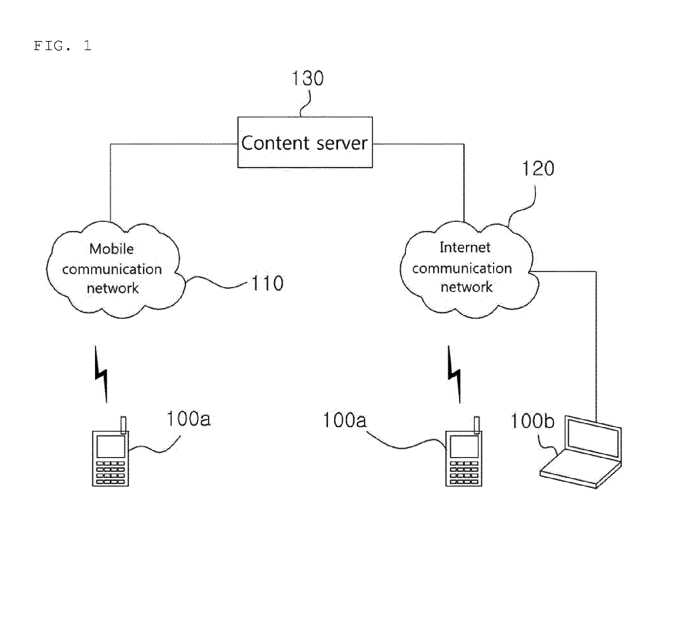

First, the configuration of a content provision system to which the present invention may be applied is described with reference to FIG. 1.

FIG. 1 is a diagram illustrating the configuration of the content provision system to which the present invention may be applied and in which both a mobile communication network and an Internet communication network, that is, two types of communication networks, are connected to a content server.

As illustrated in FIG. 1, in the content provision system to which the present invention may be applied, both a mobile communication network 110 and an Internet communication network 120 are connected to a content server 130.

That is, in this embodiment of the present invention, both the mobile communication network 110 and the Internet communication network 120 may be connected to the content server 130 and then content may be received from the content server 130, but the present invention is not limited thereto.

The Internet communication network 120 may be connected to the content server 130 in a wired or wireless way in order to receive content from the content server 130.

A client connected to the mobile communication network 110 may be a portable terminal 100a, such as a mobile phone, a smart phone or a touch pad which may access the mobile communication network 110, but the present invention is not limited thereto.

The mobile communication network 110 may be classified into second generation (2G), third generation (3G) and fourth generation (4G) networks based on the level of development thereof or technology applied thereto, and may be classified into Global System for Mobile Communications (GSM), Code Division Multiple Access (CDMA) and Long Term Evolution (LTE) networks based on the technical scheme. In the following description, however, the mobile communication network 110 includes all mobile communication networks regardless of the above classification.

If the client accesses the Internet communication network 120 via a wireless connection, the client may access the Internet communication network 120 through the portable terminal 100a. If the client is connected to the Internet communication network 120 via a wired connection, the client may be a terminal 100b, such as a common personal computer (PC) or a laptop computer, which may be connected via a wireless connection, but is not limited thereto.

In this embodiment of the present invention, in order to apply data transmission acceleration technology for faster data transfer, IP addresses are matched with information about communication network service providers and then stored in advance.

The information about a communication network service provider may include information about the type of a communication network, such as information about whether the mobile communication network 110 or the Internet communication network 120 is used, in addition to information about the name, service country or area of the communication network service provider.

Furthermore, the information about the type of communication network may include details of a mobile communication network, such as a 2G, 3G or 4G network. In the case of an Internet communication network, the information about the type of communication network may include information indicative of a wired or wireless line based on an IP address.

When a content transmission request is received, an IP address included in the content transmission request is extracted, and information about a communication network service provider that matches the extracted IP address is read.

Accordingly, information about a communication network, such as a communication network service provider that has requested the transmission of content, may be determined. A data acceleration algorithm capable of sending data more rapidly may be selected based on the information about the communication network, and data is transmitted in accordance with the selected data acceleration algorithm.

The data acceleration algorithm, also called a data transmission acceleration algorithm, is an algorithm for changing a function that is performed upon sending data based on the characteristics of a communication network. In particular, an algorithm that is applied to a transfer control protocol (TCP), that is, a protocol widely used in data transfer, has been widely known as the data acceleration algorithm.

If the data acceleration algorithm is applied to a protocol, such as the TCP, the protocol is also called a modified transfer protocol because it has changed from a standard protocol.

Most of modified transfer protocols have been modified in order to relatively increase the transfer rate of content or the certainty of data transfer as compared with the standard transfer protocol. Hereinafter, algorithms applied to such modified transfer protocols are collectively called a data acceleration algorithm.

In the case of a transfer control protocol (TCP) widely used in the Internet, the data acceleration algorithm may include, for example, a delay-based TCP congestion control algorithm and a loss-based TCP congestion control algorithm.

In general, in the case of a mobile communication network, technology using a loss-based TCP congestion control algorithm, such as BIC and CUBIC (product names), is overshot upon transmitting data. Accordingly, a great packet loss occurs, and thus deteriorates TCP performance.

Accordingly, in the case of a mobile communication network, it is more efficient to use a delay-based TCP congestion control algorithm, such as Vegas (a product name).

Furthermore, the transfer rate of content may be increased using various parameters, such as a windows size and a slow start method that determine TCP performance, and the detection of retransmission.

For example, faster acceleration performance may be provided by more conservatively performing the slow start in the mobile communication network than in the Internet communication network.

That is, the content provision system according to an embodiment of the present invention may determine the type of communication network or the characteristics of a communication network based on information about an IP address, and thus may provide content more rapidly.

The content provision system may determine whether a content transmission request is a content transmission request over a 2G, 3G or 4G network based on information matched with an IP address, for example, in the case of a mobile communication network.

In the case where an Internet communication network is used, if a wireless Internet communication network is managed by a separate service provider or a separate IP address is used in the wireless Internet communication network, whether a content transmission request is a content transmission request over a wired Internet communication network or a content transmission request over a wireless Internet communication network may be determined based on an IP address because information about the separate service provider or the separate IP address is previously stored.

Accordingly, a data acceleration algorithm suitable for the characteristics of a communication network may be selected such that content is transmitted more rapidly.

A communication network service provider capable of accessing the content server 130 may be any global communication network service provider.

Accordingly, it may be practically difficult to store all the IP addresses of global service providers and all the IP addresses of global Internet communication network communication service provider. Furthermore, if information about all IP addresses is matched with information about all communication network service providers and stored, the amount of data that needs to be stored considerably increases.

Accordingly, an IP address included in a content transmission request is extracted, the extracted IP address is compared with previously stored information, and whether the extracted IP address is the IP address of a mobile communication service provider or the address of an Internet communication network service provider is determined. If it is determined that the extracted IP address is not a registered IP address, data may be transmitted without using data transmission acceleration technology.

As another method, a method of determining the characteristics of a communication network using a method different from a method based on an IP address may be used.

For example, a mobile communication network has relatively higher latency than an Internet communication network because of the characteristics of the mobile communication network. Accordingly, such latency may be used.

That is, the latency between the content server and a device that has made a content transmission request may be measured. If the measured latency is higher than a predetermined reference, the content transmission request may be determined to be made over a mobile communication network. If the measured latency is equal to or lower than the predetermined reference, the content transmission request may be determined to be made over an Internet mobile communication network.

As another method, a method of determining the type of communication network based on a comparison with the maximum segment size (MSS) or maximum transfer size (MTU) as the characteristics of a communication network may be further used.

In a transfer control protocol (TCP) that is widely used as a transfer protocol, pieces of information about the MSS or MTU are exchanged when devices for data transmission are initially connected.

In general, in the case of an Internet communication network, the MSS is set to 1460 bytes. In contrast, in the case of mobile communication networks, such as 3G and LTE, the MSS is set to 1400 or 1380 bytes.

In the case of an Internet communication network, if the MSS is generally set to 1460 bytes, the MTU is set to 1500 octets. In contrast, in the case of a mobile communication network, if the MSS is generally set to 1400 or 1380 bytes, the MTU is set to 1440 or 1420 octets.

Accordingly, whether the type of communication network is a mobile communication network or an Internet communication network may be determined based on the comparison with information about the MSS or MTU.

Therefore, whether the type of communication network is a mobile communication network or an Internet communication network is determined in accordance with a method using at least one of latency, the MSS and the MTU.

In particular, if a method using an IP address and a method using at least one of latency, the MSS and the MTU are complementarily used upon determining the characteristics of a communication network, data may be transmitted more rapidly even without storing a large quantity of data.

If the characteristics of a communication network are determined, content having a format suitable for the characteristics of the communication network may be provided.

For example, if the type of communication network, that is, one of the characteristics of a communication network, such as a mobile communication network or an Internet communication network, may be determined, a data format suitable for the characteristics of a communication network may be selected.

In particular, video data may be provided in a different format in accordance with different coding based on the terminal 100a on which the video data is displayed.

For example, in scalable video coding according to H.264, content having a high definition (HD) format, a standard definition (SD) format, and a quarter video graphic array (QVGA) format may be simultaneously generated.

QVGA has a pixel configuration of 320 × 240, which corresponds to 1/4 of the resolution of VGA (640×80). QVGA is widely used in a handheld terminal having a small screen like a mobile phone in order to provide optimum resolution. A resolution of 720 × 480 is classified as an SD level, and a resolution of 1,280 × 720 or 1,920 × 1,080 is classified as an HD level.

That is, pieces of content having the HD, SD and QVGA formats may be simultaneously generated by performing scalable video coding on the original content within the content server 130 or using an encoding device connected to the content server 130, and content in an appropriate format may be transmitted based on the type of communication network.

For example, a content transmission request over the mobile communication network 110 is commonly a content transmission request using the terminal 100a. In such a case, the content in a QVGA format may be transmitted. In the case of a content transmission request over the Internet communication network 120, the content in an HD or SD format may be transmitted.

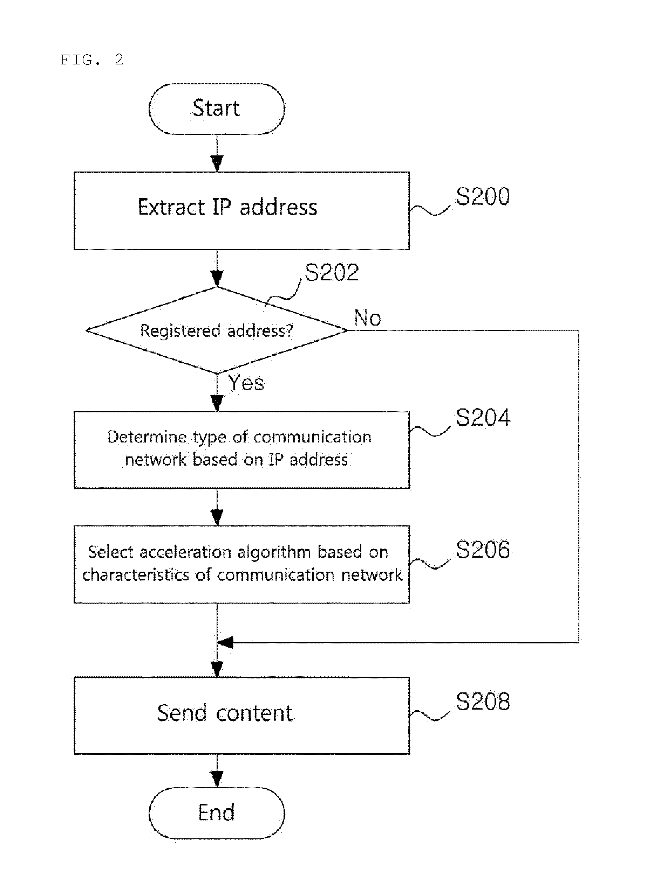

A method of providing content according to an embodiment of the present invention is described below with reference to FIG. 2.

FIG. 2 is a flowchart illustrating a method of providing content according to an embodiment of the present invention.

As illustrated in FIG. 2, in the method of providing content according to an embodiment of the present invention, first, an IP address included in a content transmission request is extracted at step S200. Whether or not the extracted IP address is a previously stored IP address is determined at step S202.

If it is determined that the extracted IP address is the previously stored IP address, that is, that information about the IP address has been stored, information about a communication network service provider that matches the IP address is read, and the type of communication network is determined at step S204.

When the type of communication network is determined, a data acceleration algorithm suitable for the determined type of communication network is selected at step S206.

Content is transmitted in accordance with the selected data acceleration algorithm at step S208.

A TCP acceleration algorithm in a TCP that is widely used in data transfer in the Internet may be selected as a data acceleration algorithm selected based on information about a communication network. Content may be transmitted to a device that has made a content transmission request in accordance with the selected TCP acceleration algorithm.

In particular, the TCP acceleration algorithm may include a delay-based TCP congestion control algorithm and a loss-based TCP congestion control algorithm.

In general, in the case of a mobile communication network, techniques in accordance with the loss-based TCP congestion control algorithm, such as BIC and CUBIC, are overshot upon sending data. Accordingly, a high packet loss occurs, and thus deteriorates TCP performance.

Accordingly, in the case of a mobile communication network, it is more efficient to use a delay-based TCP congestion control algorithm, such as Vegas.

Furthermore, the transfer rate of content may be increased using various parameters, such as a windows size and a slow start method, which determine TCP performance, and the detection of retransmission.

For example, faster acceleration performance may be provided by more conservatively performing the slow start in the mobile communication network than in the Internet communication network.

That is, if the type of a communication network is determined to be a mobile communication network, the delay-based TCP congestion control algorithm may be used as a data acceleration algorithm using the mobile communication network. If the type of a communication network is determined to be an Internet communication network, the loss-based TCP congestion control algorithm may be used as a data acceleration algorithm using the Internet communication network.

Accordingly, in accordance with the content provision system according to an embodiment of the present invention, the type of communication network or the characteristics of a communication network may be determined based on information about an IP address, thereby being able to send content more rapidly.

If an extracted IP address is not a registered IP address, information about the characteristics of a communication network is not determined. In such a case, content is transmitted using a common data transmission method without using data transmission acceleration technology using a separate data acceleration algorithm.

Although not shown in FIG. 2, if an extracted IP address is not a registered IP address, information about the characteristics of a communication network is not determined. In such a case, the characteristics of the communication network may be determined by measuring latency, for example.

A method of determining the characteristics of a communication network by performing compassion with the MSS or MTU may be further used.

Furthermore, a data acceleration algorithm suitable for the characteristics of a communication network may be selected based on the characteristics of the communication network determined by measuring latency as described above, and content may be transmitted in accordance with the selected data acceleration algorithm.

It will be apparent that the content provision method according to an embodiment of the present invention may be implemented in the form of a program.

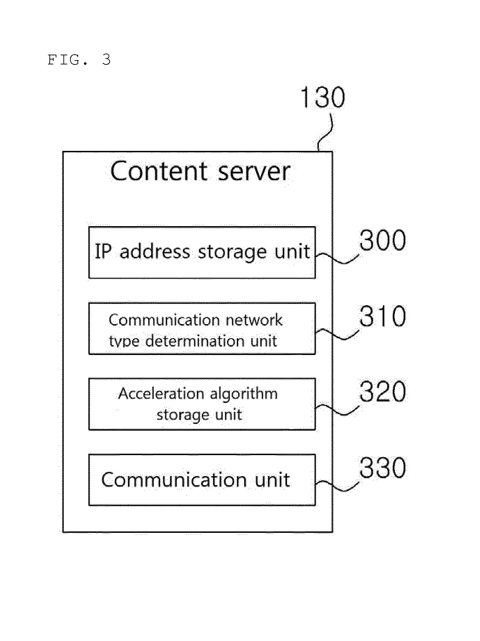

The configuration of the content server 130 according to an embodiment of the present invention is described below with reference to FIG. 3.

FIG. 3 is a diagram illustrating the configuration of the content server 130 according to an embodiment of the present invention.

As illustrated in FIG. 3, the content server 130 according to an embodiment of the present invention includes an IP address storage unit 300, a communication network type determination unit 310, an acceleration algorithm storage unit 320, and a communication unit 330.

The IP address storage unit 300 stores information about communication network service providers and IP addresses that are matched with each other.

Information about a communication network service provider may include information about the type of communication network, such as information about whether a mobile communication network or an Internet communication network is used, in addition to information about the name, service country or area of the communication network service provider.

Furthermore, information about the type of communication network may include the details of a mobile communication network, such as a 2G, 3G or 4G network. In the case of an Internet communication network, the information about the type of communication network may include information indicative of a wired or wireless line based on an IP address.

The communication network type determination unit 310 determines the characteristics of a communication network based on information about a communication network service provider that matches an IP address stored in the IP address storage unit 300.

Determining the characteristics of a communication network may include determining the type of communication network, such as determining whether the type of a communication network is a mobile communication network or an Internet communication network.

That is, if the IP address of a device that has made a content transmission request is an IP address stored in the IP address storage unit 300, the communication network type determination unit 310 reads information about a matched communication network service provider, and determines the characteristics of a communication network, in particular, the type of communication network.

If, as a result of the determination of the communication network type determination unit 310, the IP address of the device that has made the content transmission request is not an IP address stored in the IP address storage unit 300, that is, if information about a communication network service provider that matches an extracted IP address is not present, the communication network type determination unit 310 may measure the latency between the content server 130 and the device that has made the content transmission request, and may determine the type of communication network by comparing the measured latency with a predetermined reference.

Furthermore, if, as a result of the determination of the communication network type determination unit 310, the IP address of the device that has made the content transmission request is not an IP address stored in the IP address storage unit 300, that is, if information about a communication network service provider that matches an extracted IP address is not present, the communication network type determination unit 310 may determine the type of communication network by comparing information about at least one of the MSS or MTU of the device that has made the content transmission request with a predetermined reference.

The acceleration algorithm storage unit 320 stores information about a data acceleration algorithm for data transfer that is selected based on information about the characteristics of a communication network determined by the communication network type determination unit 310.

If, as a result of the determination of the communication network type determination unit 310, the type of communication network, that is, one of the characteristics of a communication network, is determined to be a mobile communication network as described above, the delay-based TCP congestion control algorithm may be used. If, as a result of the determination of the communication network type determination unit 310, the type of communication network is determined to be an Internet communication network, the loss-based TCP congestion control algorithm may be used. Information about the delay-based TCP congestion control algorithm and the loss-based TCP congestion control algorithm may be stored in the acceleration algorithm storage unit 320.

The communication unit 330 is connected to another device that forms a communication network and is configured to receive a content transmission request and send content in response to the content transmission request.

The communication unit 330 of the content server 130 according to this embodiment of the present invention sends data in accordance with an acceleration algorithm selected from among the data acceleration algorithms stored in the acceleration algorithm storage unit 320.

It will be apparent that the content server according to this embodiment of the present invention may be implemented in the form of a digital processing device, such as a server in which the content provision method according to an embodiment of the present invention is implemented in the form of a program and the program has been installed.

As described above, in accordance with the method and apparatus for providing content according to the embodiments of the present invention, there is an advantage in that content can be provided more rapidly based on the characteristics of a communication network using a single content server.

Furthermore, there is an advantage in that content can be provided more rapidly in accordance with a different data acceleration algorithm based on the characteristics of a communication network.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A content provision method, the method being performed by a content server connected to a communication network and configured to provide content, comprising:
extracting an Internet protocol (IP) address included in a received content transmission request;
determining whether or not information about a communication network service provider that matches the extracted IP address is present;
selecting a data acceleration algorithm based on the information about the communication network service provider if it is determined that the information about the communication network service provider is present; and
sending requested content in accordance with the selected data acceleration algorithm.

2. The method of claim 1, wherein the information about the communication network service provider may be information including the name, service area and type of communication network of the communication network service provider.

3. The method of claim 2, wherein the information about the type of communication network may be information indicative of one of the mobile communication network and the Internet communication network.

4. The method of claim 3, wherein if the type of communication network is the mobile communication network, the data acceleration algorithm may be a delay-based transfer control protocol (TCP) congestion control algorithm.

5. The method of claim 3, wherein if the type of communication network is the Internet communication network, the data acceleration algorithm may be a loss-based TCP congestion control algorithm.

6. The method of claim 1, wherein determining whether or not the information about the communication network service provider that matches the extracted IP address is present may include, if it is determined that the information about the communication network service provider matched with the extracted IP address is not present, transmitting the requested content without applying the data acceleration algorithm.

7. The method of claim 1, wherein determining whether or not the information about the communication network service provider that matches the extracted IP address is present may include, if it is determined that the information about the communication network service provider matched with the extracted IP address is not present, measuring latency between the content server and a device that has made the content transmission request, and determining the type of communication network may be determined by comparing the measured latency with a predetermined reference. Thereafter, the data acceleration algorithm may be selected based on information about the determined type of communication network.

8. The method of claim 1, wherein determining whether or not the information about the communication network service provider that matches the extracted IP address is present may include, if it is determined that the information about the communication network service provider matched with the extracted IP address is not present, determining the type of communication network by comparing information about at least one of the maximum segment size (MSS) and the maximum transfer size (MTU) between the content server and a device that has made the content transmission request with a predetermined reference. Thereafter, the data acceleration algorithm may be selected based on information about the determined type of communication network.

9. An apparatus connected to a communication network and configured to provide content, comprising:
an IP address storage unit configured to store information about a communication network service provider that matches an IP address;
an acceleration algorithm storage unit configured to store a data acceleration algorithm;
a communication network type determination unit configured to determine whether or not an IP address extracted from a content transmission request is included in the IP address storage unit; and
a communication unit configured to send requested content in accordance with a data acceleration algorithm selected based on the information about the communication network service provider if, as a result of the determination of the communication network type determination unit, it is determined that the IP address extracted from the content transmission request is included in the IP address storage unit.

10. The apparatus of claim 9, wherein the information about the communication network service provider may be information including the name, service area and type of communication network of the communication network service provider.

11. The apparatus of claim 10, wherein the information about the type of communication network may be information indicative of one of the mobile communication network and the Internet communication network.

12. The apparatus of claim 11, wherein if the type of communication network is the mobile communication network, the data acceleration algorithm that is used for the communication unit to send the requested content may be a delay-based transfer control protocol (TCP) congestion control algorithm.

13. The apparatus of claim 11, wherein if the type of communication network is the Internet communication network, the data acceleration algorithm that is used for the communication unit to send the requested content may be a loss-based TCP congestion control algorithm.

14. The apparatus of claim 9, wherein if, as a result of the determination of the communication network type determination unit, it is determined that the information about the communication network service provider matched with the extracted IP address is not present, the communication unit may send the requested content without in accordance with the data acceleration algorithm.

15. The apparatus of claim 9, wherein if, as a result of the determination of the communication network type determination unit, it is determined that the information about the communication network service provider matched with the extracted IP address is not present, the communication network type determination unit may measure latency between the content server and a device that has made the content transmission request and determine the type of communication network by comparing the measured latency with a predetermined reference, and the communication unit may send the requested content in accordance with a data acceleration algorithm selected based on information about the type of communication network which is determined by the communication network type determination unit.

16. The apparatus of claim 9, wherein if, as a result of the determination of the communication network type determination unit, it is determined that the information about the communication network service provider matched with the extracted IP address is not present, the communication network type determination unit may determine the type of communication network by comparing information about at least one of an MSS and an MTU between the content server and a device that has made the content transmission request with a predetermined reference, and the communication unit may send the requested content in accordance with a data acceleration algorithm selected based on information about the type of communication network which is determined by the communication network type determination unit.

17. A recording medium having a program for implementing a content provision method recorded thereon, the program for implementing a content provision method being performed by a content server connected to a communication network and configured to provide content, the method comprising:
including extracting an IP address included in a received content transmission request;
determining whether or not information about a communication network service provider that matches the extracted IP address is present;
selecting a data acceleration algorithm based on the information about the communication network service provider if it is determined that the information about the communication network service provider is present; and sending requested content in accordance with the selected data acceleration algorithm.
